# EUROPÄISCHE PATENTANMELDUNG

(11) **EP 0 825 347 A1**
(43) Veröffentlichungstag der Anmeldung: **25.02.1998**
(21) Anmeldenummer: 97111801.3
(22) Anmeldetag: 11.07.1997
(51) Int. Cl.: F15B 1/24, F16L 55/05

(54) **Dämpfungseinrichtung für das hydraulische Antriebssystem einer Stanzmachine**

(30) Priorität: 21.08.1996 DE 19633644
(71) Anmelder: C. Behrens AG, 31061 Alfeld (Leine) (DE)
(72) Erfinder: Erbe, Fabian, Dipl.-Ing., 31141 Hildesheim (DE); Freter, Heiko, Dipl.-Ing., 37574 Einbeck (DE)

(57) **Zusammenfassung**

Zur Realisierung einer Dämpfungseinrichtung für das hydraulische Antriebssystem einer Stanzmaschine, welche gleichermaßen zur Dämpfung hochfrequenter Druckschwingungen kleiner Amplitude und niederfrequenter Druckschwingungen großer Amplitude geeignet ist, wird ein in einem Zylinder (1) beweglicher, durch eine Membran (18) in zwei Kolbenräume (19,20) unterteilter, mit perforierten Kolbenstirnwandungen (21,22) versehener Kolben (2) vorgeschlagen, wobei der der Kolbenstirnwand (22) zugekehrte Zylinderraum (11) eine Gasfeder bildet und wobei der diesem gegenüberliegende Zylinderraum (10) mit dem Hydraulikmedium beaufschlagt ist. Hochfrequente Druckschwingungen kleiner Amplitude werden durch Auslenkung der Membran (18) bei im wesentlichen stillstehendem Kolben (2) gedämpft, wohingegen niederfrequente Druckschwingungen großer Amplitude unter Auslenkung des Kolbens (2) gedämpft werden. Durch Einstellung einer Gasvorspannung mittels einer Zusatzeinrichtung, die über die Bohrung (9) auf den Zylinderraum (11) einwirkt, kann die Charakteristik dieser Dämpfungseinrichtung justiert werden.

## Beschreibung

Die Erfindung bezieht sich auf eine Vorrichtung entsprechend dem Oberbegriff des Anspruchs 1.

Schneidpressen in der Form sogenannter Revolverschneidpressen oder auch solcher mit einer Einzelkopfstation sind in mannigfacher Form bekannt. Sie dienen der Bearbeitung plattenartiger Werkstücke, die gegenüber einer Arbeitsstation unter Mitwirkung eines Positioniersystems wie z.B. eines Koordinatentisches zugestellt werden. In der Arbeitsstation gelangt das Stanzwerkzeug, welches im Regelfall aus einem zumindest durch einen Stempel gebildeten Oberwerkzeug und einem zumindest durch eine Matrize gebildeten Unterwerkzeug gebildet wird, in Eingriff mit dem Werkstück.

Zum Antrieb des Werkzeugs, wobei es sich im wesentlichen um eine vertikale Bewegung gegenüber der Ebene des Werkstücks handelt, jedoch auch des Positioniersystems werden zunehmend hydraulische Antriebssysteme eingesetzt. Sämtliche Bewegungen des Werkzeugs und des Positioniersystems werden durch eine übergeordnete CNC-Steuerung koordiniert.

Nach Maßgabe des Arbeitsprogramms gestaltet sich der Betrieb des hydraulischen Antriebssystems außerordentlich unterschiedlich. So erfordert beispielsweise ein Nibbelbetrieb einen Vorschub des Werkstucks in sehr schneller Folge entlang vergleichsweise kurzer Wegelemente, welches eine dementsprechende kurze Beaufschlagung eines entsprechenden hydraulischen Stellgliedes erforderlich macht und welches bei zur Zeit auf dem Markt befindlichen Systemen in der Form von bis zu 1000 Vorschüben pro Minute möglich ist. Diese Arbeitsweise ist somit durch ein relativ hochfrequentes Bewegen vergleichsweise geringer Volumina eines Druckmediums gekennzeichnet und führt zu einer dementsprechenden pulsierenden Beanspruchung von Leitungselementen.

Darüber hinaus muß bei bestimmten Werkzeugen, jedoch auch Betriebsarten der maximal mögliche Vorschubweg eines hydraulischen Stellgliedes zurückgelegt werden, welches zwar mit einer entsprechend geringeren Frequenz geschieht, jedoch mit einer Bewegung entsprechend großer Volumina an Druckmedium verbunden ist.

Diese pulsierenden Ströme des Druckmediums bei unterschiedlichen Frequenzen machen den Einsatz einer Dämpfungsvorrichtung erforderlich, damit in den Tankleitungen sowohl ein Überdruck als auch ein Unterdruck in Grenzen gehalten werden kann.

Zur konstruktiven Realisierung geeigneter Dämpfungsvorrichtungen sind beispielsweise aus 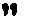 Grundlagen und Komponenten der Fluidtechnik Hydraulik", Der Hydrauliktrainer, Band 1, Mannesmann Rexroth GmbH 1991, Speichersysteme nach Art von Kolben-, Membran- und Blasenspreichern bekannt, die auftretende Druckmaxima dadurch reduzieren, daß definierte Volumenanteile des Druckmediums in bereitgestellte Räume hinein ausweichen können. Bei Druckminima hingegen übertragen diese Vorrichtungen gespeicherte Energie auf das Druckmedium. Auf diese Weise ist grundsätzlich eine Glättung des Druckverlaufs und eine Minderung der mechanischen Beanspruchungen von Leitungen erreichbar, in denen das Druckmedium strömt.

Der Vorteil handelsüblicher Membranspeicher besteht in der vergleichsweise geringen Masse, deren Auslenkbewegung durch eine äußerst geringe Reibung gekennzeichnet ist. Als Energiespeicher fungiert hier jedoch eine Gasfeder, deren nichtlineare Charakteristik für den vorstehend geschilderten Anwendungsfall von Nachteil ist. Bei dem benötigten Speichervolumen ergibt sich bei anfänglichen Verschiebungen eine relativ schwache Federwirkung, die die Aufnahme kleiner Volumina an Druckmedium ermöglicht. Der Aufnahme großer Volumina steht jedoch die starke Progression der Federcharakteristik im Wege, welche zu unzulässig hohen Drücken in den angeschlossenen Leitungen führen kann.

Handelsübliche Blasenspeicher sind im Vergleich zu Membranspeichern durch größere bewegte Massen gekennzeichnet und damit durch eine vergleichsweise niedrige Eigenfrequenz und kommen insbesondere zur Dämpfung relativ hochfrequenter Druckschwankungen bereits aus diesem Grunde nicht in Betracht.

Auch Kolbenspeicher sind wegen der Notwendigkeit von Dichtungen zwischen relativ zueinander bewegten Teilen in einem erheblichen Ausmaß reibungsbehaftet und unter anderem wegen eines stick-slip-Effektes zur Aufnahme kleiner Volumenströme bei relativ hohen Frequenzen ungeeignet.

Sämtliche dieser hydropneumatischen Speicher sind im übrigen standardmäßig für den Mittel- bis Hochdruckbereich ausgelegt, so daß sich im Niederdruckbereich aufgrund der Charakteristik einer Gasfeder wiederum eine geringe Eigenfrequenz ergibt.

Aus der DE 41 31 524 A1 ist ein Membranspeicher bekannt, der aus einem im wesentlichen zylindrischen Gehäuse besteht, innerhalb welchem ein ringkolbenartiges, an den Innenwandungen des Zylinders fest angeordnetes Halteteil vorgesehen ist, durch welches eine begrenzt auslenkbare, den Zylinder in zwei Zylinderräume unterteilende Membran fixiert ist, wobei der eine Zylinderraum als Flüssigkeits- und der andere als Gasraum konzipiert ist und wobei beide Zylinderräume mit Anschlußbohrungen versehen sind. Auch dieser Membranspeicher weist die klassische Charakteristik eines üblichen Membranspeichers auf und ist aufgrund seiner geringen Trägheit besonders geeignet zur Dämpfung hochfrequenter Druckpulsationen kleiner Amplituden, bei denen während einer Periode lediglich geringe Flüssigkeitsmengen bewegt werden, so daß die aus der Nichtlinearität der dem Flüssigkeitsraum gegenüberliegenden, durch den Gasraum gebildeten Gasfeder herrührenden Besonderheiten vernachlässigbar sind. Zur Aufnahme relativ niederfrequenter Druckschwingungen von großer Amplitude, bei denen während einer Periode vergleichsweise große Flüssigkeitsmengen zu bewegen sind, ist dieser Membranspeicher nicht geeignet.

Somit existiert keine Dämpfungsvorrichtung, welche das gesamte Anwendungsspektrum einer Schneidpresse überdeckt, welches nämlich gleichzeitig zur Aufnahme kleiner Volumenströme bei hoher Frequenz und großer Volumenströme bei niedriger Frequenz geeignet ist, und zwar im Niederdruckbereich.

Es ist daher die Aufgabe der Erfindung, eine Vorrichtung der eingangs bezeichneten Art zu entwerfen, die an die Erfordernisse des hydraulischen Antriebssystems einer Schneidpresse, insbesondere deren unterschiedliche Betriebsarten angepaßt ist und bei welcher in kostengünstiger Weise die oben dargelegten Nachteile der bisher bekannten einschlägigen Vorrichtungen vermieden werden. Gelöst ist diese Aufgabe bei einer solchen Vorrichtung durch die Merkmale des Kennzeichnungsteils des Anspruchs 1.

Erfindungswesentlich ist die Zusammenfassung eines Kolben- und eines Membranspeichers, welche jeweils bei unterschiedlichen Betriebsarten des hydraulischen Antriebssystems in Funktion treten. Es wird ein Kolben verwendet, innerhalb welchem eine Membran angeordnet ist, die aufgrund stirnseitiger Perforationen der Kolbenstruktur, die sich auf deren beiden Stirnseiten befinden, mit den Zylinderräumen in durchgängiger Verbindung steht, die sich beiderseits des Kolbens innerhalb des Zylinders ergeben. Die Zylinderräume sind durch die Membran dichtend voneinander getrennt, wobei der eine Zylinderraum mit dem Druckmedium beaufschlagt ist und wobei in dem anderen Zylinderraum eine Feder wirksam ist. Die perforierten Stirnseiten der Kolbenstruktur bilden gleichzeitig eine Stützkonstruktion für die Membran und begrenzen deren maximal mögliche Auslenkung gegenüber einer Ruhelage. Eine mechanische Überlastung der Membran ist somit ausgeschlossen. Ein Auftreten relativ hochfrequenter, durch eine Bewegung relativ geringer Volumenströme gekennzeichneter Druckschwankungen führt aufgrund der oben dargelegten Charakteristik des Kolbenspeichers zu keiner Relativbewegung des Kolbens gegenüber dem Zylinder, sondern lediglich zu einer dementsprechenden Auslenkung der Membran. Die Auslenkung der Membran erfolgt entgegen der Wirkung von Rückstellkräften, die hauptsächlich aus deren elastischer Verformung resultieren und auf eine solche Betriebsart des hydraulischen Antriebssystems zurückführbar sind, welche durch ein hochfrequentes Bewegen vergleichsweise geringer Volumina des Druckmediums gekennzeichnet ist. Der federbelastete und reibungsbehaftete Kolben vermag diesen kurzhubigen Bewegungen aufgrund seiner niedrigen Eigenfrequenz nicht bzw. kaum zu folgen. Anders stellt sich die Situation bei langhubigen, relativ langsameren Bewegungen dar, die mit einer Bewegung relativ großer Volumina an Druckmedium verbunden sind, falls die auf den Kolben beiderseits dessen Stirnseiten anstehende Druckdifferenz zur Überwindung von Reibungskräften ausreichend ist. Über eine Bewegung des Kolbens ist die Möglichkeit gegeben, auch diese größeren Volumina aufzunehmen und auftretende niederfrequente Druckmaxima in dem Leitungssystem zu reduzieren. Die Auslenkbewegung des Kolbens erfolgt entgegen der Rückstellkraft einer Feder, durch deren entsprechende Justierung gleichzeitig die Möglichkeit gegeben ist, bei auftretenden Druckminima gespeicherte Federenergie auf das Druckmedium zurückzuübertragen. Der Kolben in Verbindung mit der genannten Feder einerseits und die Membran andererseits bilden jeweils schwingfähige Systeme mit unterschiedlichen Eigenfrequenzen, die im Rahmen der Erfindung mit unterschiedlichen Druckamplituden angeregt werden, die jeweils unterschiedlichen Betriebsarten entsprechen. Die Vorrichtung besteht somit in einer Zusammenfassung zweier an sich bekannter Dämpfungssysteme, die jedoch zusammengefaßt zur Ausübung einer Dämpfungs- und Energiespeicherwirkung bei sämtlichen Betriebsarten einer Schneidpresse geeignet sind.

Die Merkmale des Anspruchs 2 sind auf die Ausgestaltung des Kolbens gerichtet, der hiernach aus zwei lösbar miteinander in Verbindung stehenden Teilen besteht, zwischen denen die Membran dichtend eingespannt ist. Die Verbindung der beiden Teile ist zweckmäßigerweise als Schraubverbindung ausgebildet, so daß im Bedarfsfall ein einfaches Auswechseln der Membran möglich ist.

Die Merkmale des Anspruchs 3 sind auf die weitere Ausgestaltung des Kolbens gerichtet. Beiderseits der Membran befinden sich innerhalb der Kolbenstruktur Kolbenräume, die durch die perforierten Kolbenstirnflächen begrenzt werden, wobei die axiale Erstreckung der beiden Kolbenräume zugleich die Auslenkbewegung der Membran in dieser Richtung beschränkt. Dies bedeutet, daß die Membran auf konstruktivem Wege vor Überlastungen geschützt angeordnet ist.

Die Merkmale des Anspruchs 4 sind auf die Ausbildung der mit dem Kolben zusammenwirkenden Feder gerichtet. Diese kann als Gasfeder ausgebildet sein, die mittels einer Zusatzeinrichtung unter eine wählbare Vorspannung gesetzt werden kann, so daß die Charakteristik dieser Gasfeder in weiten Grenzen justierbar ist. Mittels einer solchen Feder ist insbesondere in Verbindung mit deren progressivem Charakter gleichzeitig erreichbar, daß ein mechanisches Anschlagen des Kolbens am Deckel des Zylinders ausgeschlossen ist. Die Gasfeder bildet somit eine zusätzliche Überlastungssicherheit.

Ersatzweise für eine Gasfeder kann jedoch auch eine sonstige, vorzugsweise hinsichtlich ihrer Vorspannung justierbare Feder eingesetzt werden.

Der konstruktive Aufbau des Zylinders gestaltet sich entsprechend den Merkmalen des Anspruchs 5 vergleichsweise einfach, wobei Boden und Deckel jeweils zur Anbindung an das hydraulische Antriebssystem bzw. eine Einrichtung zur Einstellung einer definierten Gasvorspannung eingerichtet sind.

Durch die Merkmale des Anspruchs 6 ist eine exakte, an der Achse des Zylinders ausgerichtete Führung des Kolbens sichergestellt.

Die erfindungsgemäße Vorrichtung kann speziell zur Dämpfung im Niederdruckbereich ausgebildet sein und ist somit an den Betrieb einer Schneidpresse angepaßt. Durch einströmende Volumina an Druckmedium wird mittels des Federelements Energie gespeichert. welche jeweils während der Betriebsphasen, die durch Druckminima gekennzeichnet sind, in das hydraulische System zurückgeführt wird. Die erfindungsgemäße Vorrichtung zeichnet sich insgesamt durch einen konstruktiv sehr einfachen und kostengünstig herstellbaren Aufbau aus, dessen Integration in vorhandene Hydrauliksysteme problemlos möglich ist.

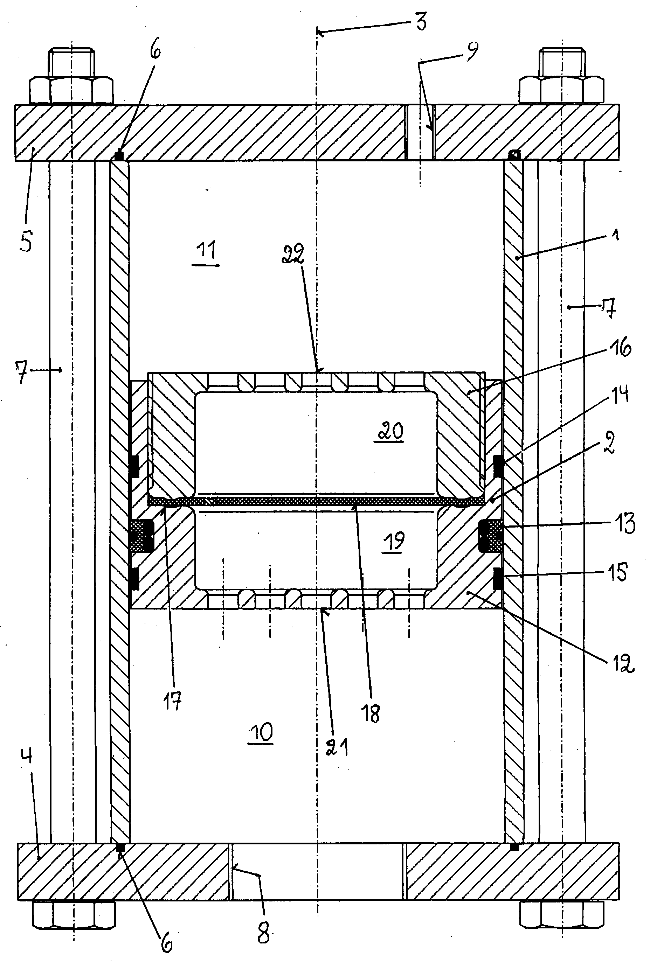

Die Erfindung wird im folgenden unter Bezugnahme auf das in der Zeichnung schematisch dargestellte Ausführungsbeispiel näher erläutert werden.

Mit 1 ist in der Zeichnungsfigur ein Zylinder der erfindungsgemäßen Dämpfungseinrichtung bezeichnet, innerhalb welchem ein Kolben 2 in Richtung der Achse 3 gleitfähig aufgenommen ist. Ein Boden 4 sowie ein Deckel 5, die jeweils als Kreisplatten ausgebildet sind und sich koaxial zu der Achse 3 erstrecken, bilden den unteren sowie oberen Abschluß des Zylinders 1.

Die Verbindung sowohl des Bodens 4 als auch des Deckels 5 mit den zugekehrten Stirnseiten des Zylinders 1 erfolgt unter Zwischenanordnung von untereinander gleich beschaffenen Dichtringen 6 mittels Zugankern 7, die jeweils zueinander fluchtende kreisringartige, radial über den Zylinder 1 hinausragende Überstände sowohl des Bodens 4 als auch des Deckels 5 durchdringen.

Mit 8 ist eine koaxial zu der Achse 3 verlaufende Bohrung des Bodens 4 bezeichnet, welche als Gewindebohrung ausgebildet sein kann und zum unmittelbaren Anschluß an das hydraulische Antriebssystem einer Stanzmaschine bestimmt ist.

Mit 9 ist eine ebenfalls als Gewindebohrung ausgebildete Bohrung des Deckels 5 bezeichnet, deren Zweckbestimmung im folgenden noch erläutert werden wird.

Durch den Kolben 2 wird der Innenraum des Zylinders in einen ersten bzw. unteren Zylinderraum 10 und einen zweiten bzw. oberen Zylinderraum 11 unterteilt. Während der untere Zylinderraum 10 über die Bohrung 8 mit dem Druckmedium des hydraulischen Antriebssystems der Stanzmaschine beaufschlagt ist, bildet der obere Zylinderraum 11 eine Gasfeder, die mit einer entsprechenden Zusatzeinrichtung über die Bohrung 9 unter Vorspannung gesetzt werden kann. Der Zylinderraum 11 in Verbindung mit der genannten Einrichtung zur Bereitstellung einer Vorspannung bildet somit ein abgeschlossenes System. Der Kolben ist zweiteilig ausgebildet und besteht aus einem ersten oder äußeren Teil 12, in dessen Mantelfläche eine mit der Zylinderinnenwandung in Berührung stehende Kolbendichtung 13 und - axial beiderseits derselben Führungsringe 14, 15 eingesetzt sind, über welche eine exakte zentrische Führung des Kolbens in Richtung der Achse 3 gegeben ist. Mit 16 ist das zweite oder innere Teil des Kolbens 2 bezeichnet, welches mit Außengewinde versehen ist und in das erste Teil 12 - sich koaxial zu diesem erstreckend - eingeschraubt ist.

Das äußere Teil 12 des Kolbens 2 weist in einem ungefähr mittigen Bereich eine kreisringartige Anschlagfläche 17 auf, welche dem Zylinderraum 11 zugekehrt ist und an welcher eine Membran 18 anliegt. Die Membran 18 ist durch die Einschraubposition des inneren Teils 16 des Kolbens 2 gegenüber der Anschlagfläche 17 dichtend verspannt.

Beide Teile 12, 16 des Kolbens 2 sind als Hohlbauteile ausgebildet und definieren beiderseits der Membran 18 Kolbenräume 19, 20, die über perforiert ausgebildete Kolbenstirnwandungen 21, 22 jeweils mit den Zylinderräumen 10, 11 kommunizieren. Die Kolbenräume 19, 20 sind durchmessergleich und die Perforationen der Kolbenstirnwandungen 21, 22 sind ebenfalls im wesentlichen gleich ausgebildet.

Im Montagezustand dieser Dämpfungseinrichtung sind der untere Zylinderraum 10 nebst dem zugehörigen Kolbenraum 19 mit einem Hydraulikmedium beaufschlagt, welches die als Folge des Stanz- bzw. Nibbelprozesses entstehenden Druckschwingungen überträgt. Der Zylinderraum 11 sowie der mit diesem kommunizierende Kolbenraum 20 hingegen stehen unter dem Druck eines Gases, z.B. Luft, wobei zwecks Realisierung einer Vorspannung über die Bohrung 9 mittels einer entsprechenden Einrichtung ein definierter Ausgangsdruck einstellbar ist.

Das dynamische Verhalten dieser Dämpfungseinrichtung wird durch das Verhalten der Membran 18 und des Kolbens 2 bestimmt, wobei sich in Abhängigkeit von der Frequenz der Druckschwingungen unterschiedliche Bewegungsverhältnisse ergeben.

Im Falle hochfrequenter Druckschwingungen mit verhältnismäßig geringer Amplitude wirken diese sich über die Bohrung 8 und die Kolbenstirnwandung 21 lediglich auf die Membran 18 aus, die aufgrund ihrer geringen Masse in Verbindung mit einer reibungsarmen Auslenkbewegung diesen schnellen Druckschwankungen folgen kann, wohingegen der Kolben 2 aufgrund seiner mit erheblicher Reibung behafteter Führung unter diesen Bedingungen bewegungslos bleibt. Die Auslenkung der Membran 18 in den Kolbenraum 20 hinein erfolgt unter elastischer Verformung entgegen der Wirkung des hier anstehenden Gasdruckes, bis ein den hydraulischen Druck kompensierender Gegendruck aufgebaut ist bzw. ein Kräftegleichgewicht vorhanden ist.

Lediglich bei einem Einströmen größerer Volumina an Hydraulikmedium und unter der Voraussetzung, daß die auf den Kolben 2 einwirkende Druckdifferenz zur Überwindung von Reibungskräften ausreichend ist, kommt es zu einer Bewegung des Kolbens 2 in Richtung auf den Zylinderraum 11 hin, und zwar bis ein Kräftegleichgewicht zwischen den durch das Hydrauliksystem und den durch die Gasfeder auf den Kolben ausgeübten Kräfte erreicht ist. Ausgangspunkt für die Bemessung der durch den Zylinderraum 11 sowie den Kolbenraum 20 gegebenen Gasfeder, insbesondere der einzustellenden Gasvorspannung ist der in dem Hydrauliksystem, insbesondere dessen Leitungen höchste tolerierbare Druck in Verbindung mit den hierbei bewegten Volumina des Hydraulikmediums, woraus sich entsprechend dem progressiven Charakter der Gasfeder der dementsprechende maximale Verschiebeweg des Kolbens 2 ergibt. Somit ist die erfindungsgemäße Dämpfungseinrichtung aufgrund der unterschiedlichen Dämpfungscharakteristiken einer Membran und eines Kolbens gleichermaßen geeignet für eine Dämpfung hochfrequenter Druckschwingungen kleiner Amplitude und niederfrequenter Druckschwingungen großer Amplitude.

## Patentansprüche

1. Vorrichtung zur Dämpfung von Druckschwingungen des Druckmediums des hydraulischen Antriebssystems einer Schneidpresse, mit einem innerhalb eines Zylinders (1) angeordneten, hohl ausgebildeten Kolben (2), durch welchen der Zylinder (1) mittels einer begrenzt auslenkbaren und innerhalb des Kolbens (2) angeordneten Membran (18) in zwei Zylinderräume (10,11) unterteilt ist,
dadurch gekennzeichnet,
- daß die Membran (18) über stirnseitige Perforationen der Kolbenstruktur mit den Zylinderräumen (10,11) in durchgängiger Verbindung steht und
- daß der Kolben (2) entgegen der Rückstellkraft einer Feder beweglich geführt und einseitig mit dem zu dämpfenden Druckmedium beaufschlagbar ist.

2. Vorrichtung nach Anspruch 1,
dadurch gekennzeichnet,
- daß der Kolben (2) aus zwei ineinandergesetzten und miteinander in lösbarer Verbindung stehenden, hohl ausgebildeten Teilen (12,16) besteht, zwischen denen die Membran (18) dichtend eingespannt ist.

3. Vorrichtung nach Anspruch 1 oder 2,
dadurch gekennzeichnet,
- daß sich die Kolbenstirnwandungen (21,22) unter Belassung von Kolbenräumen (19,20) innerhalb der Kolbenstruktur mit Abstand zu der Membran erstrecken.

4. Vorrichtung nach einem der vorangegangenen Ansprüche 1 bis 3,
dadurch gekennzeichnet,
- daß die mit dem Kolben (2) zusammenwirkende Feder eine Gasfeder ist und
- daß der Zylinder (1), insbesondere der Zylinderraum (11) mit einer Bohrung (9) zum Anschluß einer Einrichtung zur Einstellung einer definierten Gasvorspannung versehen ist.

5. Vorrichtung nach einem der vorangegangenen Ansprüche 1 bis 4,
dadurch gekennzeichnet,
- daß der Zylinder (1) stirnseitig durch einen Boden (4) und einen Deckel (5) begrenzt ist,
- daß der Boden (4) mit dem Deckel (5) über Zuganker (7) in Verbindung steht und
- daß der Boden (4) mit einer Bohrung (8) zum Einführen des Druckmediums des Antriebssystems in den Zylinderraum (10) versehen ist.

6. Vorrichtung nach einem der vorangegangenen Ansprüche 1 bis 5,
dadurch gekennzeichnet,
- daß der Kolben (2) mit wenigstens einer Kolbendichtung (13) und - axial von dieser beabstandet - mit Führungsringen (14,15) versehen ist, die in schleifender Berührung an der Innenseite des Zylinders (1) anliegen.
